# EUROPÄISCHE PATENTSCHRIFT

(11) **EP 2 122 807 B1**
(45) Veröffentlichungstag und Bekanntmachung des Hinweises auf die Patenterteilung: **13.06.2018**
(21) Anmeldenummer: 08706034.9
(22) Anmeldetag: 28.02.2008
(51) Int. Cl.: H02K 3/18, H02K 15/04, H01F 5/00, H01F 41/086

(54) **VERFAHREN ZUM MASCHINELLEN WICKELN EINER SPULE**
METHOD FOR THE MECHANICAL WINDING OF A COIL
PROCEDE D'ENROULEMENT MECANIQUE D'UNE BOBINE

(30) Priorität: 16.03.2007 AT 4212007
(43) Veröffentlichungstag der Anmeldung: 25.11.2009
(73) Patentinhaber: Egston System Electronics Eggenburg GmbH, 3730 Eggenburg (AT)
(72) Erfinder: PRAND-STRITZKO, Ernst, 2091 Langau (AT)
(74) Vertreter: Gibler & Poth Patentanwälte KG
(86) Internationale Anmeldenummer: PCT/AT2008/000066
(87) Internationale Veröffentlichungsnummer: WO 2008/113086

(56) Entgegenhaltungen:
- EP-A- 0 920 107
- JP-A- 2005 020 875
- JP-Y1- S 451 777
- US-A- 4 794 361
- US-A- 5 221 060
- US-A1- 2004 263 015
- US-A1- 2006 022 549
- US-A1- 2006 033 395

## Beschreibung

Die Erfindung betrifft ein Verfahren zum maschinellen Wickeln einer Spule mit wenigstens einem Draht, wobei die Spule eine Spuleninnenseite und zumindest zwei Wickellagen umfasst, wobei eine Wickellage von im Wesentlichen parallel zur Spuleninnenseite angeordneten Windungen gebildet wird.

Spulen finden zahlreiche Anwendung in elektrischen Bauteilen, beispielsweise Stellmotoren und Elektromotoren. Vor allem die jüngste Entwicklung im Transportwesen, vor allem im Automobilsektor, verlangt immer leistungsfähigere Elektromotoren bei gleichzeitig beschränkten oder immer geringeren Abmessungen dieser. Deshalb wird versucht das vorgegebene Volumen im Stell- oder Elektromotor möglichst vollständig mit dem die Spule ausbildenden Draht zu füllen, um die Leistungsdichte zu erhöhen und immer leistungsfähigere Motoren bei gleichbleibenden Abmessungen oder immer kleinere und leichtere Motoren bei gleichbleibender Leistung auszubilden.

Da im von der Zentral- oder Rotorachse abgewandten Bereich des Elektromotors, bedingt durch den größer werdenden Umfang, mehr Volumen zur Verfügung steht als im der Zentral- oder Rotorachse zugewandten Bereich, werden zur besseren Nutzung des für die Spulen vorhandenen Volumens deshalb sogenannte konische Spulen verwendet, welche im Außenbereich breiter als im Rotorbereich des Elektromotors ausgebildet sind.

An der konusförmigen Spulenaußengeometrie der Spule kommt es dabei immer wieder zu Unregelmäßigkeiten beim Wickeln, sodass die beim maschinellen Wickeln mehrerer Spulen ungleiche Spulenaußengeometrien und größere Maßtoleranzen auftreten. Wenn nunmehr mehrere Spulen im elektrischen Bauteil und/oder der elektrischen Maschine nebeneinander angeordnet sind, so müssen diese Spulen zueinander beabstandet angeordnet werden, um den beim Wickeln entstandenen Toleranzen Rechnung zu tragen.

Aus der EP 0 920 107 A2 ist eine Statorspule bekannt, welche zwei Wickellagen umfasst. Aus der US 2006/0033395 A1 ist eine Spule mit konusförmiger Außengeometrie bekannt. Aus der US 2004/0263015 A1 ist eine Spule mit konusförmiger Außengeometrie bekannt, wobei der Draht einen rechteckigen Querschnitt aufweist.

Aus der JP 2005 020875 A ist eine Spule mit konusförmiger Außengeometrie bekannt, wobei der Draht zum Teil kreuzförmig gewunden ist.

Aus der US 2006/0022549 A1 ist eine Spule mit konusförmiger Außengeometrie bekannt, wobei die Spuleninnenseite eine Riffelung zur Führung des Drahtes aufweist.

Aus der US 4 794 361 A ist eine Spule mit konusförmiger Außengeometrie bekannt, wobei der Draht einen rechteckigen Querschnitt aufweist.

Aus der JP S45 1777 Y1 ist ein Verfahren zum Aufspulen eines nicht linienförmigen Materials bekannt.

Aus der US 5 221 060 A ist ein Verfahren zum Aufwickeln eines Glasfaserkabels bekannt.

Aufgabe der Erfindung ist es daher ein Verfahren zum maschinellen Wickeln einer Spule der eingangs genannten Art anzugeben, mit welchem die vorgenannten Nachteile vermieden werden können und mit welchem Spulen mit hoher Präzision, geringen Maßtoleranzen in großer Stückzahl wirtschaftlich gewickelt werden können.

Erfindungsgemäß wird dies dadurch erreicht, dass zumindest beim Wickeln einer ersten Wickellage an einer vorgebbaren Stelle zwischen einer ersten Windung und einer zur ersten Windung benachbarten zweiten Windung, wobei die zweite Windung unmittelbar nachfolgend nach der ersten Windung gewickelt wird, eine Lücke ausgebildet wird, wobei die Breite der Lücke zumindest bereichsweise wenigstens einen Drahtdurchmesser beträgt, und dass der Draht nach dem Wickeln der zweiten Windung, und gegebenenfalls nach dem Wickeln weiterer Windungen, in die Lücke geführt wird, wobei zumindest eine Stützwindung ausgebildet wird.

Vorteilhaft dabei ist, dass durch die Lücke eine maschinell einfach herzustellende Stelle zur Aufnahme der Stützwindung ausgebildet ist. Die Lücke stellt eine besonders vorteilhafte Möglichkeit dar, die Aufnahme für die Stützwindung in der Spule auszubilden. Windungen einer späteren Wickellage werden beim Wickeln der Spule in die Lücke geführt und bilden derart die Stützwindung oder die Stützwindungen aus. Die Lücke kann dazu in Ihrer Lage präzise vorbestimmt sein. Bei fortschreitendem Wickelvorgang wird der Draht eines nachfolgend gewickelten Drahtstückes in der Lücke angeordnet und das derart in der Lücke angeordnete Drahtstück bildet die Stützwicklung aus. Dabei sind sowohl die Lücke als auch die Stützwindung in der Position an der Spule mit hoher Präzision und zuverlässiger Reproduzierbarkeit herstellbar. Vorteilhaft ist dabei weiters, dass der Draht an zumindest einem Ende der Stützwindung durch die Stützwindung gegen seitliches Verrutschen gestützt wird und derart ein seitliches Verrutschen des Drahtes vermieden wird. Derart wird der Draht auch trotz beim Wickeln auftretender Querkräfte präzise und reproduzierbar in der Stützwindung und in den direkt mit der Stützwindung verbundenen Windungen angeordnet. Die Spule kann dem für die Spule im elektrischen Bauteil zur Verfügung stehenden Volumen besser angepasst werden, wodurch eine gute Raumausnützung und somit eine Erhöhung der Leistungsdichte erzielt wird. Wie ausgeführt ist derart die Stützwindung und der Drahtsprung lagepräzise vorbestimmbar und eine hohe Güte der Maßtoleranzen wird ermöglicht.

Weiters ist vorgesehen, dass vor oder nach der Wicklung der zumindest einen Stützwindung zumindest eine Windung einer zweiten Wickellage gewickelt wird, wobei die zweite Wickellage benachbart zur ersten Wickellage und auf der der Spuleninnenseite abgewandten Seite der ersten Wickellage angeordnet ist. Dadurch kann der Draht von einer ersten Wickellage in eine zweite Wickellage geführt werden. Da die Stützwindung ein seitliches Verrutschen des Drahtes verhindert, kann der Drahtvorschub einer den Draht beim Wickeln führenden Führungseinrichtung der Wickelmaschine, insbesondere eines Wickelarms, im Bereich des Lagensprungs um eine vorbestimmte Toleranz von dem zu wickelnden Versatz des Drahtes abweichen. Dabei können die reproduzierbaren Maßtoleranzen der Wicklung der Spule geringer sein als die Positionierungstoleranzen der Führungseinrichtung der Wickelmaschine.

Weiters ist vorgesehen, dass mit der Stützwindung die zweite Wickellage begrenzt wird. Dadurch kann die zweite Wickellage lediglich über einen Teilbereich der Spulenfläche, insbesondere der Spulenaußenseite, ausgebildet sein, wobei eine Stufe ausgebildet werden kann. Die Stützwindung, welche gegenüber einem seitlichen Verrutschen abgestützt ist, kann die Lageposition dieser Stufe mit hoher Präzision und hoher Reproduzierbarkeit ausbilden, wodurch eine hohe Formpräzision und geringe Maßtoleranzen der konischen Spule, insbesondere der Geometrie der Spulenaußenseite ermöglicht sein können.

Gemäß einer weiteren Ausführungsform der Erfindung kann vorgesehen sein, dass die Länge der ersten Wickellage größer als die Länge der zweiten Wickellage ist. Dadurch kann die Stufe derart ausgebildet sein, dass eine konische Spulenaußenseite ausgebildet werden kann, wobei das Verrutschen der Stützwindung mit besonderer Zuverlässigkeit unterbunden werden kann. Weiters kann dadurch zumindest die zweite Wickellage lediglich über einen Teilbereich der Spulenfläche, insbesondere der Spulenaußenseite, ausgebildet sein. Die Stützwindung, welche gegenüber einem seitlichen Verrutschen abgestützt ist, kann die Lageposition dieser Stufe mit hoher Präzision und hoher Reproduzierbarkeit ausbilden, wodurch geringe Maßtoleranzen der konischen Spule, insbesondere der Geometrie der Spulenaußenseite ermöglicht sein können.

In diesem Zusammenhang kann in weiterer Ausgestaltung der Erfindung vorgesehen sein, dass die Windungen der zweiten Wickellage nach der Wicklung der Stützwindung gewickelt werden und dass an der Einführungsstelle des Drahtes in die Lücke eine Führung für die erste in der zweiten Wickellage gewickelte Windung ausgebildet wird. Dadurch kann die Stützwindung zur Führung für die erste in der zweiten Wickellage gewickelt Windung verwendetet werden. Durch die präzise Lagepositionierung der Stützwindung kann auch die erste Windung der zweiten Wickellage mit hoher Präzision der Lage dieser Windung gewickelt werden. Eine Stufe mit hoher Lagepräzision wird dadurch reproduzierbar wickelbar, wobei diese diese Stufe ausbildende erste Windung durch die Führung gegen ein Verrutschen, insbesondere gegen ein Verrutschen in Richtung des offenen Endes der zweiten Wickellage, gesichert ist. Derart können konischen Spule mit geringen Maßtoleranzen erzielt werden, weshalb benachbarte Spulen mit geringerem Zwischenraum zueinander angeordnet werden können oder sich die benachbarten Spulen berühren können. Das für die Spulen zur Verfügung stehende Volumen wird derart besonders gut genützt und die Leistungsdichte wird weiter gesteigert. Insbesondere werden Stell- und Elektromotoren mit gleichbleibender Leistung und/oder kleineren Abmessungen und niedrigerem Gewicht möglich und die Maßtoleranzen und die elektrischen Eigenschaften der Spule sind mit besonders geringen Toleranzen ausgebildet.

Gemäß einer weiteren Ausbildung der Erfindung kann vorgesehen sein, dass die Stützwindung zur nachfolgend gewickelten Windung zumindest um zwei, vorzugsweise um zumindest drei, insbesondere um zumindest vier, Drahtdurchmesser beabstandet wird. Derart kann der Stützwindung folgend der Drahtsprung ausgebildet werden, welcher mehrere Windungen einer unterhalb des Drahtsprunges ausgebildeter Wickellage kreuzt und wodurch der Versatz des Drahtes parallel zur Spulenachse in diesem Drahtsprung mehrere Drahtdurchmesser betragen kann. Zumindest an einem Ende der Stützwindung ist die Ausbildung eines Drahtsprunges, sprich eines vergrößerten Vorschubes des Drahtes, möglich, wobei die Stützwindung diesen Drahtvorsprung stützt und ein Verrutschen des Drahtes am Ende des Drahtsprunges verhindert. Derart werden Drahtsprünge über mehrere Drahtdurchmesser und über mehrere Wickellagen hinweg mit hoher Präzision, mit geringen Toleranzen und mit hoher Reproduzierbarkeit in einer großen Anzahl von Spulen auch bei maschinellem Wickeln ausgebildet und komplexe Spulengeometrien können mit hoher Genauigkeit maschinell gewickelt werden können.

Gemäß einer weiteren Ausführungsform der Erfindung kann vorgesehen sein, dass die Stützwindung zur vorhergehend gewickelten Windung zumindest um zwei, vorzugsweise um zumindest drei, insbesondere um zumindest vier, Drahtdurchmesser beabstandet wird. Dadurch kann der Stützwindung vorhergehend der Drahtsprung ausgebildet sein. Dabei kann die Stützwindung, welche gegenüber einem seitlichen Verrutschen gesichert ist, des der Stützwindung zugewandten Endes des Drahtsprunges in der Lage fixieren. Damit ist zumindest dieses Ende des Drahtsprunges mit hoher Lagepräzision gegenüber einem Verrutschen gesichert und dieser Drahtsprung kann über viele Spulen hinweg mit konstant geringer Lagetoleranz gewickelt werden.

In Weiterführung der Erfindung kann vorgesehen sein, dass die Spule mit einer orthozyklischen Wicklung ausgebildet wird. Bei einer orthozyklischen Wicklung sind die Windungen in einem ersten Bereich entlang des Spulenumfangs gewickelt, insbesondere in einem Großteil der Spulenaußenfläche, dass sie parallel zur Grundfläche und/oder Deckfläche geführt werden. Der durch den Vorschub der Führungseinrichtung der Wickelmaschine geführte Versatz des Drahtes erfolgt dabei in einem zweiten Bereich entlang des Spulenumfangs, wobei der zweite Bereich nur einen Teil des Spulenumfanges ausmacht. Der zweite Bereich kann auch mehrteilig, insbesondere zweiteilig, über den Spulenumfang verteilt ausgebildet sein. Dies ermöglicht Spulen mit einer hohen Ordnung der Windungen und Spulen, in welchen auch in höheren Wickellagen eine hohe Ordnung der Windungen gewährleistet ist.

Vorteilhafterweise kann vorgesehen sein, dass die Stützwindung zumindest bereichsweise vollständig in der ersten Wickellage angeordnet wird. Dadurch kann die Stützwirkung der Stützwindung besonders vorteilhaft und mit hoher Zuverlässigkeit ausgebildet sein. Die Stützwirkung kann auch bei auftretenden hohen Querkräften gewährleistet sein, sodass Drahtsprünge mit hoher Zuverlässigkeit und reproduzierbarer Lage und Maßtoleranz gewickelt werden können.

In vorteilhafter Weiterführung der Erfindung kann vorgesehen sein, dass in der Lücke zumindest zwei Stützwindungen angeordnet werden. Dadurch können auch Lücken breiter als einen Drahtdurchmesser mit Stützwindungen befüllt und es können derart auch Spulen umfassend mehrere Drähte gewickelt werden. Dabei kann jeder der mehreren Drähte, welche insbesondere gleichzeitig und parallel mittels der Führungseinrichtung der Wickelmaschine gewickelt werden, in die Lücke geführt werden, sodass in jedem der mehreren Drähte eine Stützwindung ausgebildet sein kann.

Weiters wird eine Spule mit einer Maschinenlagenwicklung, insbesondere einer Maschinenlagenpräzisionswicklung, beschrieben.

Spulen finden zahlreiche Anwendung in elektrischen Bauteilen, beispielsweise in Stellmotoren und Elektromotoren. Es wird versucht das vorgegebene Volumen im Stell- oder Elektromotor möglichst vollständig mit dem die Spule ausbildenden Draht zu befüllen, um die Leistungsdichte zu erhöhen und immer leistungsfähigere Motoren bei gleichbleibenden Abmessungen oder immer kleinere und leichtere Motoren bei gleichbleibender Leistung auszubilden.

Hierbei kann vorgesehen sein, eine Spule der oben genannten Art anzugeben, wobei eine große Anzahl im Wesentlichen identischer Spulen maschinell mit hoher Präzision und geringen maßlichen Toleranzen hergestellt werden kann.

Dies kann durch eine Spule erreicht werden die nach dem erfindungsgemäßen Verfahren herstellbar ist.

Vorteilhaft dabei ist, dass die Lagetoleranzen und die Maßtoleranzen der einzelnen Windungen geringer als die Fertigungstoleranzen der Wickelmaschine, also die durch die beim Wickeln erzielbaren Toleranzen und/oder Positionierungstoleranzen der Führungseinrichtung sein können.

Die Erfindung betrifft weiters eine Spule mit einer Maschinenlagenwicklung, insbesondere einer Maschinenlagenpräzisionswicklung, mit wenigstens einem Draht, wobei die Spule eine Spulenachse, eine Spuleninnenseite, eine Grundfläche, eine Deckfläche, und zumindest zwei Wickellagen umfasst, wobei eine Wickellage von im Wesentlichen parallel zur Spuleninnenseite angeordneten Windungen gebildet wird, die Spulenachse parallel zur Haupt-Magnetfeldrichtung der stromdurchflossenen Spule angeordnet ist und wobei die Grundfläche und die Deckfläche jeweils im Wesentlichen normal auf die Spulenachse sind.

Spulen finden zahlreiche Anwendung in elektrischen Bauteilen, beispielsweise in Stell- und Elektromotoren, wobei versucht wird, das vorgegebene Volumen im Stell- oder Elektromotor möglichst vollständig mit dem die Spule ausbildenden Draht zu füllen.

Weitere Aufgabe der Erfindung ist es, eine Spule der oben genannten Art anzugeben, wobei der für Spulen zur Verfügung stehende Raum eines diese Spulen umfassenden elektrischen Bauteiles möglichst vollständig mit dem die Spule ausbildenden Draht zu füllen.

Erfindungsgemäß wird dies dadurch erreicht, dass zumindest eine zweite Wickellage unvollständig gewickelt ist, und dass das von der Grundfläche bzw. der Deckfläche beabstandete Ende der zweiten Wickellage von einer Stützwindung begrenzt ist, wobei die Stützwindung zumindest bereichsweise in der zur zweiten Wickellage in Richtung der Spuleninnenseite benachbarten ersten Wickellage angeordnet ist.

Vorteilhaft dabei ist, dass der Draht an zumindest einem Ende der Stützwindung durch die Stützwindung gegen seitliches Verrutschen gestützt wird und derart ein seitliches Verrutschen des Drahtes vermieden wird. Derart wird der Draht auch trotz beim Wickeln auftretender Querkräfte präzise und reproduzierbar in der Stützwindung und in den direkt mit der Stützwindung verbundenen Windungen angeordnet. Durch die Zulässigkeit höherer Querkräfte während des Wickelvorganges werden maschinell gewickelte Drahtsprünge hoher Präzision ermöglicht, wobei zumindest ein Drahtsprung an zumindest einem Ende der Stützwindung vorgesehen ist. Durch die Lagefixierung der Stützwindung ist somit ein präziser Versatz des Drahtes beim Drahtsprung, welcher in der Größenordnung mehrerer Drahtdurchmesser liegt, beispielsweise drei, vier, fünf oder mehr, mit hoher maschineller Reproduzierbarkeit ausgebildet und die Gefahr des Verrückens des Drahtes im Bereich des Drahtsprunges tritt nicht auf. Die Spule kann dem für die Spule im elektrischen Bauteil zur Verfügung stehenden Volumen besser angepasst werden, wodurch eine gute Raumausnützung und somit eine Erhöhung der Leistungsdichte erzielt wird.

In diesem Zusammenhang können weitere Windungen zumindest bereichsweise in der ersten Wickellage an gegenüberliegende Seiten der Stützwindung angrenzen. Dadurch kann sie Stützwindung in parallel und in beide Richtungen der Spulenachse gegenüber einem Verrutschen gesichert sein, sodass Querkräfte parallel und in beide Richtungen der Spulenachse von dieser Stützwindung aufgenommen werden können.

Die Erfindung betrifft auch ein elektrisches Bauteil, insbesondere Elektromotor, mit einer Spulenanordnung, insbesondere einer ringförmigen Spulenanordnung.

Elektrische Bauteile finden zahlreiche Anwendung insbesondere in Stell- und Elektromotoren, wobei versucht wird, das vorgegebene Volumen im elektrischen Bauteil möglichst vollständig mit dem die Spule ausbildenden Draht zu füllen und derart einen hohen Füllgrad zu erzielen.

Erfindungsgemäß wird dies dadurch erreicht, dass das elektrische Bauteil zumindest eine erfindungsgemäße Spule umfasst.

Derart können auch komplexe Spulengeometrien mit hoher Genauigkeit maschinell gewickelt werden. Durch die kleinen Toleranzen können benachbarte Spulen im elektrischen Bauteil mit geringerem Abstand zueinander angeordnet werden und die Leistungsdichte des elektrischen Bauteiles, insbesondere des Elektromotors, wird erhöht. Insbesondere können Stell- und Elektromotoren mit gleichbleibender Leistung und/oder kleineren Abmessungen und niedrigerem Gewicht ausgebildet werden.

In diesem Zusammenhang kann vorgesehen sein, dass eine Spulenaußenfläche zumindest einer der Spulen wenigstens eine Stufe aufweist, wobei die wenigstens eine Stufe von außenliegenden Windungen einer unteren Wickellage und einer außenliegenden Windung einer oberen Wickellage gebildet ist, dass - in einer die Spulenachse enthaltenden Schnittebene gesehen - eine Stufenfreifläche durch die Windungen der Stufe und die äußere Tangente an die Windungen der Stufe gebildet ist, und dass in eine der wenigstens einen Stufenfreifläche eine weitere der Spulen eingreift. Derart können auch komplexe Geometrien des elektrischen Bauteils durch die einzelnen Spulenanordnungen ausgebildet werden. Insbesonders kann ein besonders kleiner Durchmesser der ringförmigen Spulenanordnung realisiert werden, wobei die Zwischenräume zwischen den benachbarten Spulen besser genutzt und der Füllgrad der Spulenanordnung noch weiter erhöht werden kann.

Vorteilhafterweise kann vorgesehen sein, dass zumindest zwei benachbarte der Spulen jeweils eine stufenförmige Spulenaußenfläche aufweisen, wobei die Stufen der einander zugewandten Spulenaußenflächen dieser Spulen so angeordnet sind, dass der Abstand der Spulenaußenflächen im Wesentlichen kleiner oder gleich dem 1,3fachen, vorzugsweise dem 1,2fachen, insbesondere dem 1,1fachen, des Drahtdurchmessers ist. Derart sind besonders geringe Leervolumina auch zwischen den benachbarten Spulen realisierbar, sodass der Füllgrad der Spulenanordnung weiter erhöht wird und die Leistungsdichte der Spulenanordnung weiter gesteigert werden kann.

Die Erfindung wird unter Bezugnahme auf die beigeschlossenen Zeichnungen, in welchen Ausführungsfonnen beispielhaft dargestellt sind, näher beschrieben. Dabei zeigt:
Fig. 1 Eine Hälfte einer Spule einer ersten Ausführungsform auf einem Spulenträger mit mehreren Wickellagen und mehreren Wickellagen in einer schematischen Darstellung im Schnitt;
Fig. 2 eine innerste Wickellage einer Hälfte einer Spule in einer ersten Ausführungsform und Kennzeichnung der Vorschubrichtung der ersten Wickellage in einer schematischen Schnittdarstellung;
Fig. 3 zwei innerste Wickellagen einer Hälfte einer Spule einer ersten Ausfuhrungsform und Kennzeichnung der Vorschubrichtung der zweiten Wickellage in einer schematischen Schnittdarstellung;
Fig. 4 drei innerste Wickellagen einer Hälfte einer Spule einer ersten Ausführungsform und Kennzeichnung der Vorschubrichtung der dritten Wickellage in einer schematischen Schnittdarstellung;
Fig. 5 vier Wickellagen einer Hälfte einer Spule einer ersten Ausführungsform und Kennzeichnung der Vorschubrichtung der vierten Wickellage in einer schematischen Schnittdarstellung;
Fig. 6 fünf Wickellagen einer Hälfte einer Spule einer ersten Ausführungsform und Kennzeichnung der Vorschubrichtung der fünften Wickellage in einer schematischen Schnittdarstellung;
Fig. 7 eine Hälfte einer Spule einer ersten Ausführungsform und Kennzeichnung der Vorschubrichtung der sechsten Wickellage in einer schematischen Schnittdarstellung;
Fig. 8 eine Spule einer zweiten Ausführungsform in axonometrischer Darstellung während des Wickelvorganges in einer Momentaufnahme vor dem Wickeln eines Drahtsprunges;
Fig. 9 eine Spule einer zweiten Ausführungsform in axonometrischer Darstellung während des Wickelvorganges in einer Momentaufnahme nach dem Wickeln eines Drahtsprunges und einer unmittelbar dem Drahtsprung folgenden Stützwindung;
Fig. 10 eine Spule einer zweiten Ausführungsform in axonometrischer Darstellung nach vollendetem Wickelvorgang und
Fig. 11 zwei benachbarte Spulen einer dritten Ausführungsform und vierten Ausführungsform im Schnitt bei beispielhafter Anordnung in einem - nicht dargestellten - elektrischen Bauteil in schematischer Darstellung.

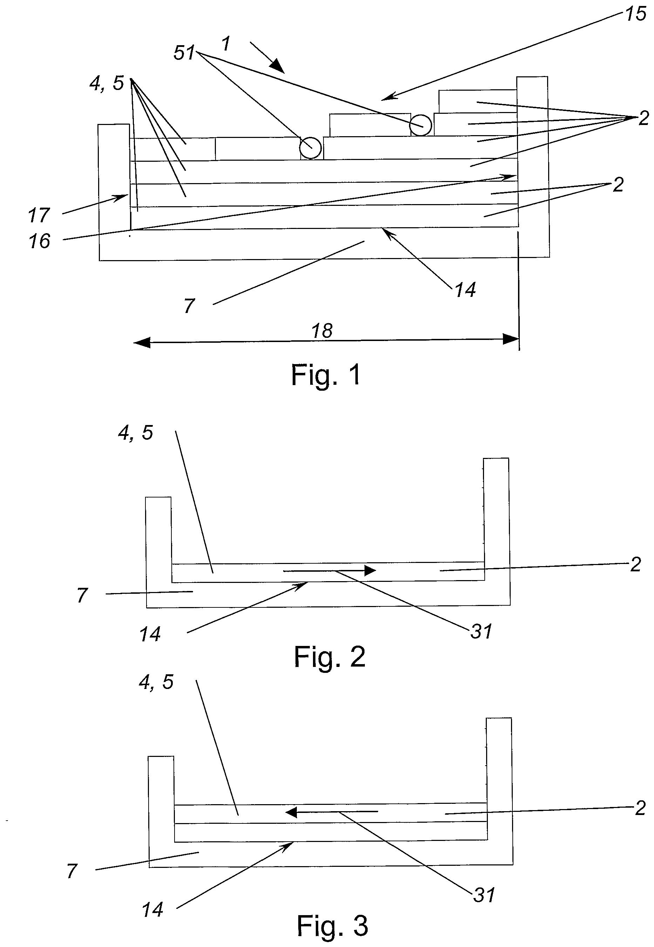

Die Fig. 1 bis 11 zeigen Ausführungsformen einer erfindungsgemäßen Spule 1, wobei die erfindungsgemäße Spule 1 mittels eines Verfahrens zum maschinellen Wickeln einer Spule 1 mit wenigstens einem Draht 4 gebildet wird, wobei die Spule 1 eine Spuleninnenseite 14 und zumindest zwei Wickellagen 2 umfasst, wobei eine Wickellage 2 von im Wesentlichen parallel zur Spuleninnenseite 14 angeordneten Windungen 5 gebildet wird. Dabei ist zur Erhöhung der Präzision der Wicklung und zur Verringerung der Maßtoleranzen der Wicklung vorgesehen, dass beim Wickeln einer ersten Wickellage 21 an einer vorgebbaren Stelle zwischen einer ersten Windung 54 und einer zur ersten Windung 54 benachbarten zweiten Windung 55, wobei die zweite Windung 55 unmittelbar nachfolgend nach der ersten Windung 54 gewickelt wird, eine Lücke 6 ausgebildet wird, wobei die Breite der Lücke 6 zumindest bereichsweise wenigstens einen Drahtdurchmesser beträgt, und dass der Draht 4 nach dem Wickeln der zweiten Windung 5, und gegebenenfalls nach dem Wickeln weiterer Windungen 5, in die Lücke 6 geführt wird, wobei zumindest eine Stützwindung 51 ausgebildet wird. Vorteilhaft dabei ist, dass der Draht 4 in der Stützwindung 51 gestützt wird und derart ein seitliches Verrutschen des Drahtes 4 vermieden wird. Durch die Zulässigkeit höherer Querkräfte während des Wickelvorganges werden maschinell gewickelte Drahtsprünge 41 hoher Präzision ermöglicht. Der Drahtsprung 41 ist an zumindest einem Ende der Stützwindung 51 vorgesehen. Durch die Lagefixierung der Stützwindung 51 ist somit ein präziser Versatz 42 des Drahtes beim Drahtsprung 41 möglich, welcher in der Größenordnung mehrerer Drahtdurchmesser liegt, beispielsweise drei, vier, fünf oder mehr. Die Gefahr des Verrückens des Drahtes 4 im Bereich des Drahtsprunges 41 tritt nicht auf. Die Spule 1 kann dem für die Spule 1 im elektrischen Bauteil zur Verfügung stehenden Volumen besser angepasst werden, wodurch eine gute Raumausnützung und somit eine Erhöhung des Füllgrades und der Leistungsdichte erzielt wird.

Wie ausgeführt ist die Stützwindung 51 und der Drahtsprung 41 lagepräzise vorbestimmbar und eine hohe Güte der Maßtoleranzen wird auch bei der konischen Spule 1 erzielt, weshalb benachbarte konische Spulen 1 mit geringerem Zwischenraum zueinander angeordnet werden können. Mittels der präzisen Vorbestimmbarkeit der Drahtsprünge 41 wird die stufenförmige Anordnung der Wickellagen 2 benachbarter konischer Spulen 1 aufeinander abgestimmt, sodass die benachbarten Spulen 1 einander berühren können. Das für die Spulen 1 zur Verfügung stehende Volumen wird derart besonders gut genützt und die Leistungsdichte kann wiederum gesteigert werden.

Dies Ausbildung lagepräziser Drahtsprünge 41 kann vor allem bei Spulen 1 mit nur schwach ausgeprägtem Konus wichtig sein, da, aufgrund des flachen Winkels des Konus, besonders große Drahtsprünge 41 nötig sein können. Da es hierbei beim Wickeln an einer derartigen Sprungstelle zu hohen Querkräften kommt, so ist die sichere und querkraftstabile Führung des Drahtes 4 im Bereich der Sprungstelle, vor allem die Reproduzierbarkeit der Führung des Drahtes über viele maschinengewickelte Spulen 1 hinweg, ohne Stützwindung besonders schwierig und die Ausbildung der Stützwindung daher besonders vorteilhaft.

Die Spule 1 kann auf einen Spulenträger 7 gewickelt werden. Die Spule 1 umfasst einen Draht 4, welcher einen Leiter und eine Isolationsschicht, vorzugsweise eine Lackisolation aufweist. Der Leiter kann Metalle, insbesondere Kupfer, Aluminium, Silber oder einer Legierung einer der vorstehenden Metalle, umfassen und gezogen, gegossen oder gewalzt sein. Der Querschnitt des Drahtes 4 kann ohne Seitenkante, insbesondere rund, elliptisch oder mit Seitenkanten, insbesondere rechteckig oder quadratisch ausgebildet sein.

Die Spule 1 kann auf einen Spulenträger 7 gewickelt werden, wobei der Spulenträger 7 Führungen für eine innerste Wickellage 2 aufweisen kann. Der Spulenträger 7 kann die präzise Anordnung der Windungen 2 der innersten Wickellage 31 unterstützen. Der Spulenträger 7 kann hiezu an der Fläche, welche mit der Spuleninnenseite 14 in unmittelbaren Kontakt steht, eine strukturierte Oberfläche in Form einer Riffelung aufweisen. In den Riefen der Riffelung können die einzelnen Windungen 2 der innersten Wickellage 2 beim Wickeln, sprich während des Wickelvorganges, geführt werden. Auf diese Weise können die Windungen 2 zueinander und zum Spulenträger 7 mit vorbestimmbarer Toleranz angeordnet und eine präzise oder hochpräzise Maschinenlagenwicklung ermöglicht werden. Dabei kann der Träger 2 vorteilhafterweise mehrstückig aus mehreren voneinander beabstandeten Einzelträgern ausgebildet sein.

Die Fig. 1 zeigt eine erste bevorzugte Ausführungsform einer erfindungsgemäßen Spule 1. Die Spule 1 ist auf einem Spulenträger 14 gewickelt und umfasst vier bis sechs übereinander gewickelte Wickellagen 2, wobei an einer Deckfläche 17 der Spule 1 vier Wickellagen 2 und an einer der Deckfläche 17 gegenüberliegenden Grundfläche 16 der Spule 1 sechs Wickellagen 2 ausgebildet sind. Zwischen der Grundfläche 16 und der Deckfläche 17 der Spule 1 ist die Spulenhöhe 18 ausgebildet. In einem Bereich entlang der Spulenhöhe 18 zwischen der Grundfläche 16 und der Deckfläche 17 der Spule 1 sind fünf Wickellagen 2 ausgebildet. Entlang der Spuleninnenseite 14 gesehen - und somit entlang der Spulenhöhe 18 - kann derart eine unterschiedliche Anzahl an Wickellagen 2 ausgebildet sein. Durch die unterschiedliche Anzahl der Wickellagen 2 ist eine stufenförmige Spulenaußenseite 15 ausgebildet. Aufgrund der stufenförmigen Spulenaußenseite 15 und der unterschiedlichen Anzahl von Wickellagen 2 kann die Spule 1 auch als konische Spule 1 bezeichnet werden. Der Übergang von sechs übereinander gewickelten Wickellagen 2 auf fünf übereinander gewickelte Wickellagen 2 und der Übergang von fünf übereinander gewickelten Wickellagen 2 auf vier übereinander gewickelte Wickellagen 2 ist jeweils als Stufe 23 in der Spulenaußenseite 15 ausgebildet. In der Spule 1 gemäß der ersten Ausführungsform sind zwei Stützwindungen 51 ausgebildet. Diese zwei Stützwindungen 51 füllen zwei während des Wickelns ausgebildete Lücken 6.

Die Fig. 2 bis Fig. 7 zeigen eine Spule 1 einer ersten Ausführungsform und veranschaulichen den Herstellungsprozess dadurch, dass aufeinanderfolgend die die Spule 1 aufbauenden Wickellagen 2 und die entsprechende Vorschubrichtung 31 der jeweiligen Wickellage 2 gezeigt sind. Dazu werden einige wesentliche Arbeitsschritte eines Verfahrens zur maschinellen Wicklung einer Spule 1 gezeigt, wobei die Spule 1 aus einem Draht 4 gewickelt wird, einen Spulenträger 7, eine Spulenhöhe 18, eine Grundfläche 16, eine Deckfläche 17, eine Spuleninnenseite 14, mehrere aufeinanderfolgend gewickelte Wickellagen 2 und nach vollendeter Wicklung eine Spulenaußenseite 15 aufweist, wobei eine Wickellage 2 von im Wesentlichen parallel zur Spuleninnenseite 14 angeordneten - in dieser schematischen Darstellung nicht dargestellten - Windungen 5 gebildet wird, wobei eine Wickellage 2 sämtliche Windungen 5 mit derselben Vorschubrichtung 31 eines zusammenhängenden Stückes des Drahtes 4 umfasst.

In der Fig. 2 sind die erste Wickellage 2 und die Vorschubrichtung 31 der innersten Wickellage 2 besonders hervorgehoben. Die innerste Wickellage 2 bildet auf der zum Spulenträger 7 zugewandten Fläche die Spuleninnenfläche 14 aus. Der Spulenträger 7 kann auch als Wicklungsträger in der Wickelmaschine ausgebildet sein. Derart verbleibt nach vollendetem Wickelvorgang kein Spulenträger 7 an der Spule 1 und die Spule 1 umfasst im Wesentlichen lediglich den Draht 4.

Zur Ausbildung der innersten Wickellage 2 wird der Draht 4 an der Deckfläche 17 der Spule 1 eingeführt, in Richtung des Vorschubes, gemäß Vorschubrichtung 31, werden die einzelnen Windungen 5 der innersten Wickellage 2 nebeneinander geführt, bis die innerste Wickellage 2 an der Grundfläche 16 der Spule 1 zu Ende gewickelt ist. Im Bereich der Grundfläche 16 der Spule 1 wird der Draht 4 in die nächste Wickellage 2, also die zweitinnerste Wickellage 2, geführt und die Vorschubrichtung 31 wird gewechselt. Die Vorschubrichtung gibt dabei die Vorschubrichtung der Führungseinrichtung des Drahtes 4, insbesondere des Wickelarmes der Wickelmaschine, an. Dabei ist über die gesamte Spulenhöhe 18 die Größe des Vorschubes konstant.

Im Unterschied zur Fig. 2 ist in der Fig. 3 auch die zweitinnerste Wickellage 2 dargestellt. Die Vorschubrichtung 31 ist in dieser Wickellage 2 von Grundfläche 16 zu Deckfläche 17 weisend. Die zweitinnerste Wickellage 2 wird von der Grundfläche 16 zur Deckfläche 17 gewickelt. Dabei ist über die gesamte Spulenhöhe 18 die Größe des Vorschubes konstant. An der Deckfläche 17 der Spule 1 endet die zweitinnerste Wickellage 2 und der die Windungen 5 ausbildende Draht 4 wird in die nächsthöhere Wickellage 2, also die drittinnerste Wickellage 2, geführt.

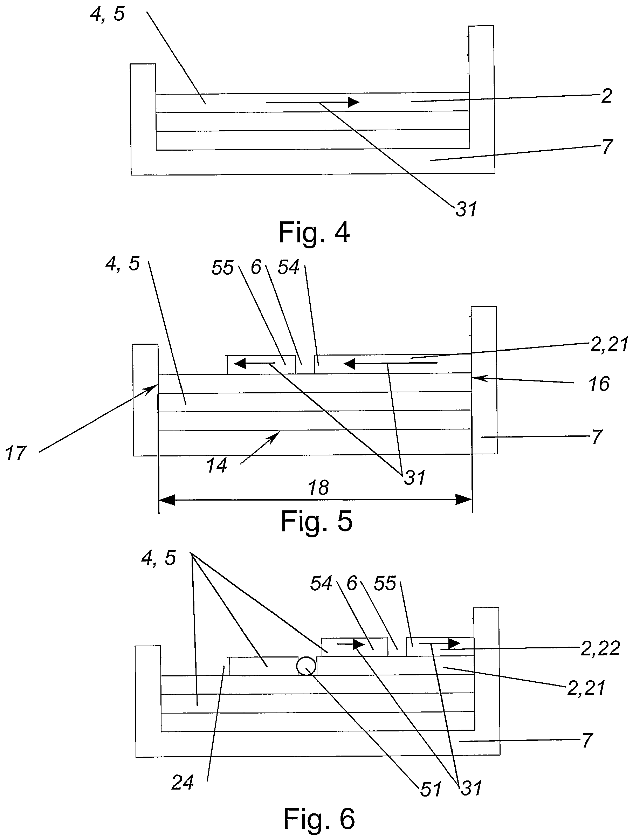

Im Unterschied zur Fig. 3 ist in der Fig. 4 auch die drittinnerste Wickellage 2 dargestellt. Nach vollständig gewickelter drittinnerster Wickellage 2 wird, an der Grundfläche 16 der Spule 1, der Draht 4 in die darüberliegende Wickellage 2, die viertinnerste Wickellage 2 geführt, die Vorschubrichtung 31 wird gewechselt und die viertinnerste Wickellage 2 wird gewickelt.

Im Unterschied zur Fig. 4 ist in der Fig. 5 auch die viertinnerste Wickellage 2 dargestellt. Im mittleren Bereich der Spulenhöhe, also in etwa in der Mitte zwischen Grundfläche 16 und Deckfläche 17, wird unmittelbar aufeinanderfolgend eine erste Windung 54 und eine zweite Windung 55 gewickelt. Derart sind die erste Windung 54 und die zweite Windung 55 benachbart zueinander ausgebildet, wobei zwischen diese beiden Windungen 5, 54, 55 eine Lücke 6 ausgebildet ist, wobei die Breite dieser Lücke 6 zumindest bereichsweise entlang des Spulenumfangs wenigstens einen Drahtdurchmesser beträgt.

Die Lücke 6 in der viertinnersten Wickellage 2 wird durch einen vergrößerten Versatz 42 des Drahtes 4 in der ersten Windung 54 ausgebildet. Dabei kann der Versatz 42 des Drahtes um im Wesentlichen einen Drahtdurchmesser größer als der Versatz 42 des Drahtes 4 im Großteil der Windungen 5 derselben Wickellage 2 ausgebildet sein. Durch den vergrößerten Versatz 42 des Drahtes 4 der ersten Windung 54 wird die darauffolgend gewickelte zweite Windung 55 benachbart und beabstandet zur ersten Windung 54 gewickelt. Der Versatz 42 des Drahtes 4 der zweiten Windung 55 wiederum entspricht dem Versatz 42 des Drahtes 4 im Großteil der Windungen 5 derselben Wickellage 2. Die Differenz von der Größe des Versatzes 42 des Drahtes 4 der ersten Windung 54 und dem Versatz 42 des Drahtes 4 im Großteil der Windungen 5 derselben Wickellage 2 bestimmt dabei die maximale Breite der in dieser Wickellage 2 ausgebildeten Lücke 6. Auf die zweite Windung 55 nachfolgend gewickelte Wicklungen 5 bilden jenen Teil dieser Wickellage 2 zwischen Lücke 6 und Deckfläche 17 aus. Die Vorschubrichtung 31 ist in sämtlichen Windungen 5 dieser Wickellage 2 dieselbe und von der Grundfläche 16 zur Deckfläche 17 gerichtet.

Die in Fig. 5 gezeigte viertinnerste Wickellage 2 erstreckt sich - im Gegensatz zu den vorhergehend gewickelten Wickellagen 2 - nicht über die gesamte Spulenhöhe 18. Nach der ersten Lücke 6 sind einige weitere Windungen 5 gewickelt, jedoch endet die vierte Wickellage 2 beabstandet von der Deckfläche 17 der Spule 1, wobei dieser Abstand größer als ein Drahtdurchmesser ist und derart ein temporäres offenes Ende 24 der viertinnersten Wickellage 2 der Spule 1 ausbildet ist.

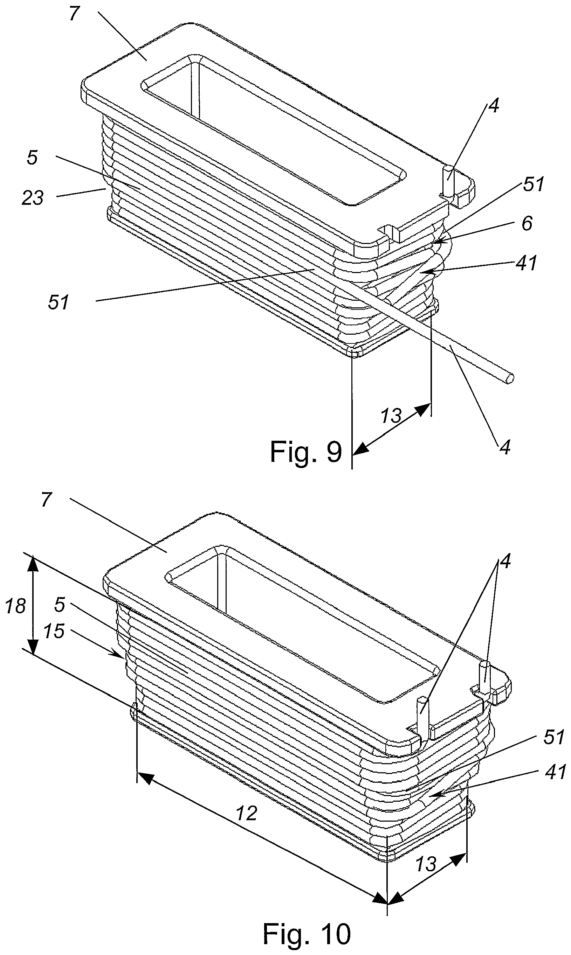

Weiterführend ist der Wickelvorgang in Fig. 6 dargestellt. In Fig. 6 sind zusätzlich zur Fig. 5 die Stützwindung 51 der viertinnersten Wickellage 2 und die fünftinnerste Wickellage 2 dargestellt. Vom temporären offenen Ende 24 der viertinnersten Wickellage 2 wird der Draht mittels eines - in den Fig. 9 und 10 dargestellten - Drahtsprunges 41 - in die Lücke 6 der vierten Wickellage 2 geführt. Bei diesem Drahtsprung 41 wird der Draht 4 über mehrere, vorteilhafterweise mehr als zwei, insbesondere mehr als drei, Windungen 5 der vorhergehend gewickelten viertinnersten Wickellage 2 geführt. Dabei kann die Stützwindung 51 zur vorhergehend gewickelten Windung 5 zumindest um zwei, vorzugsweise um zumindest drei, insbesondere um zumindest vier, Drahtdurchmesser beabstandet sein. Da bei einem derartigen Drahtsprung 41 hohe Querkräfte im Draht 4 auftreten, ist die Gefahr des Verrutschens, also eines seitlichen Abgleitens parallel zur Wickellage 2, eines Drahtstückes unmittelbar vor und nach dem Drahtsprung 41 besonders hoch. Um einen Drahtsprung 41 mit hoher Präzision und mit geringen Lagetoleranzen und Maßtoleranzen ausbilden zu können, muss der Draht 4 an den beiden Enden des Drahtsprunges 41 gegenüber dem seitlichen Verrutschen gesichert sein. Diese Sicherung erfolgt vor dem Drahtsprung 41 durch die letztgewickelte Windung 5 der viertinnersten Wickellage 2. Diese Sicherung erfolgt nach dem Drahtsprung 41 durch die unmittelbar nach dem Drahtsprung 41 gewickelte Stützwindung 51 in der viertinnersten Wickellage 2. Diese Stützwindung 51 ist dabei zu beiden Seiten in Richtung Grundfläche 16 und in Richtung Deckfläche 17 durch jeweils die erste Windung 54 und die zweite Windung 55 gehalten, sodass die Stützwindung 51 gegenüber einem seitlichen Abrutschen gesichert ist. Die erste Windung 54 und die zweite Windung 55 liegen dabei im Wesentlichen angrenzend benachbart an die Stützwindung 51 und selbst hohe durch den Drahtsprung 41 im Draht 4 auftretende Querkräfte können von der Stützwindung 51 aufgenommen werden, ohne dass die Gefahr des Verrutschens der Stützwindung 51 besteht. Dabei kann die Stützwindung 51 zumindest bereichsweise vollständig in dieser Wickellage 21 angeordnet sein.

Nach dem Wickeln der Stützwindung 51 wird der Draht 4 in die nächsthöhere Wickellage 2, also die fünftinnerste Wickellage 2, geführt, wodurch eine Stufe 23 ausgebildet wird. Mit der Vorschubrichtung 31 in Richtung der Grundfläche 16 werden einige Windungen 5 und eine erste Windung 54 der fünftinnersten Wickellage 2 gewickelt. In dieser ersten Windung 54 der fünftinnersten Wickellage 2 wird wiederum ein im Wesentlichen um einen Drahtdurchmesser vergrößerter Versatz 42 des Drahtes 4 gewickelt. Durch den vergrößerten Versatz 42 des Drahtes 4 der ersten Windung 54 der fünftinnersten Wickellage 2 wird die darauffolgend gewickelte zweite Windung 55 der fünftinnersten Wickellage 2 benachbart und beabstandet zur ersten Windung 54 gewickelt, wodurch eine Lücke 6 in der fünftinnersten Wickellage 2 ausgebildet ist. Nach dem Wickeln der zweiten Windung 55 der fünftinnersten Wickellage 2 wird die fünftinnerste Wickellage 2 in Richtung und bis zur Grundfläche 16 zu Ende gewickelt.

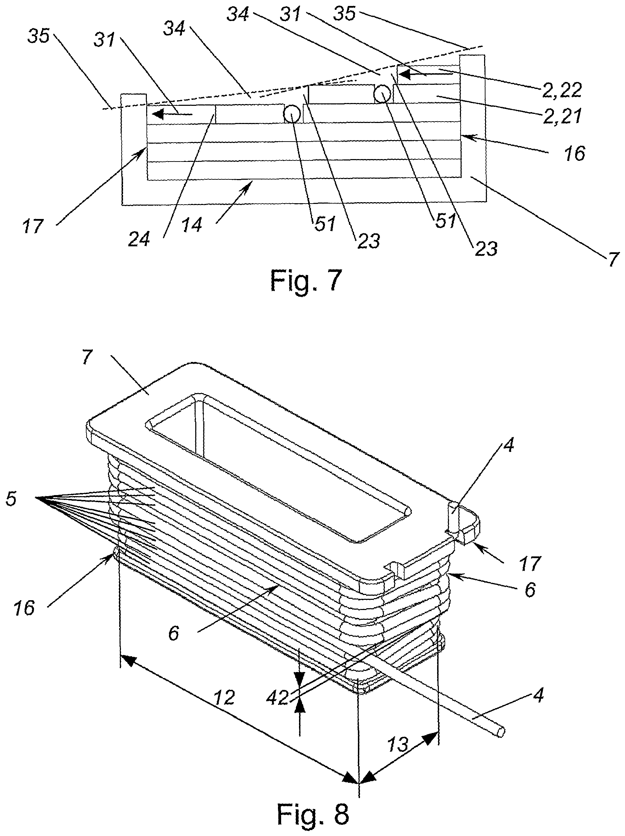

Die sechstinnerste Wickellage 2 ist in Fig. 7 besonders hervorgehoben. Der Draht 4 wird in Vorschubrichtung 31, welcher in Richtung von der Grundfläche 16 zur Deckfläche 17 ausgebildet ist, bis zur Lücke 6 in der fünftinnersten Wickellage 2 gewickelt. An dieser Lücke 6 angelangt wird der Draht 4 in diese Lücke 6 geführt, wodurch eine Stützwindung 51 ausgebildet ist. Diese Stützwindung 51 bildet die Stütze für den unmittelbar darauffolgenden - nicht dargestellten - Drahtsprung 41, welcher zwischen einem Ende dieser Stützwindung 51 und einer in einer unterschiedlichen Wickelschicht 2, in diesem Fall der viertinnersten Wickelschicht 2, angeordneten zweiten Windung 5 angeordnet ist. Der Drahtsprung 41 ist in einer erfindungsgemäßen Spule 1 dieser Ausführungsform zwischen der Stützwindung 51 in der fünftinnersten Wickellage 2 zum temporären offenen Ende 24 der viertinnersten Wickellage 2 ausgebildet. Der Drahtsprung 41 erfolgt innerhalb einer Windung 5. Insbesondere kann der Drahtsprung 41 in einem Teilbereich einer Windung 5 erfolgen. Dabei kann die Spule 1 mit einer orthozyklischen Wicklung ausgebildet sein.

Dieser Drahtsprung erstreckt sich über eine Mehrzahl von Windungen 5, wobei die Stützwindung 51 zur nachfolgend gewickelten Windung 5 zumindest um zwei, vorzugsweise um zumindest drei, insbesondere um zumindest vier, Drahtdurchmesser beabstandet sein kann. Dabei können hohe Querkräfte im Drahtstück im Drahtsprung 41 und in den beiden Drahtstücken im Bereich der beiden Enden des Drahtsprunges 41 auftreten. Diese Querkräfte werden im Bereich unmittelbar vor dem Drahtsprung 41 durch die Stützwindung 51 in der fünften Wickellage 2 aufgenommen und werden unmittelbar nach dem Drahtsprung 41 durch die das temporäre offene Ende 24 begrenzende letzte Windung 5 der viertinnersten Wickellage 2 aufgenommen. Ein Verrutschen des Drahtes 4 im Bereich dieses Drahtsprunges 41 und im Bereich der Enden dieses Drahtsprunges 41 wird derart einfach und mit hoher Zuverlässigkeit verhindert, wobei dass die Stützwindung 51 zumindest bereichsweise vollständig in dieser Wickellage 21 angeordnet wird.

Nach diesem Drahtsprung 41 wird die viertinnerste Wickellage 2 in Vorschubrichtung 31, welche in der viertinnersten Wickellage 2 zur Deckfläche 17 gerichtet ist, fertig gewickelt. Derart wird der Bereich zwischen temporärem offenem Ende 24 der viertinnersten Wickellage 2 und der Deckfläche 17 mit Windungen 5 befüllt. Die viertinnerste Wickellage 2 wird derart vollständig zwischen der Grundfläche 16 und der Deckfläche 17 ausgebildet, sodass das temporäre offene Ende 24 in dieser Wickellage 2 in der fertig gewickelten Spule 1 nicht aufscheint. Zum Abschluss wird der Draht 4 durch den Spulenträger 7 im Bereich der Deckfläche 17 durchgeführt und die Spule 1 ist vollständig gewickelt. Die fertig gewickelte Spule 1 gemäß dieser Ausführungsform weist zwei sichtbare Drahtsprünge 41 und zwei sichtbare Stufen 23 auf.

Bei kreissymmetrischen elektrischen Bauteilen, insbesondere bei Elektromotoren, nimmt der Umfang des elektrischen Bauteiles mit zunehmendem Abstand vom Zentrum und der Zentrumsachse des elektrischen Bauteiles zu und damit einhergehend steigt der Umfang und die Oberfläche des elektrischen Bauteiles mit zunehmendem Abstand von der Zentrumsachse an. Um diesen Zugewinn an Oberfläche und Volumen im Bauteil zu nutzen, kann die Grundfläche 16 der Spule 1, welche beispielsweise sechs Wickellagen 2 aufweist, der Zentrumsachse abgewandt und die Deckfläche 17 der Spule 1, welche beispielsweise vier Wickellagen 2 aufweist, der Zentrumsachse zugewandt angeordnet werden. Entlang der Spulenhöhe 18 sind dabei zwei Stufen 23 in der Spulenaußenfläche 15 ausgebildet. Das für die Spule 1 zur Verfügung stehende Volumen kann derart besonders gut genutzt und die Leistung des elektrischen Bauteiles kann bei gleichen Außenabmessungen erhöht werden.

Es kann vorgesehen sein, dass der Draht 4 entlang des Spulenumfanges einer Windung 5 in wenigstens einem ersten Bereich entlang des Spulenumfangs im Wesentlichen normal zu einer Spulenachse 11 geführt ist, wobei die Spulenachse 11 parallel zur Haupt-Magnetfeldrichtung der stromdurchflossenen Spule 1 angeordnet ist, wobei wenigstens ein zweiter Bereich entlang des Spulenumfangs zur Ausbildung des Versatzes 42 des Drahtes 4 - der Drahtvorschub - ausgebildet ist. Derart kann eine Spule 1 mit orthozyklischer Wicklung gewickelt werden. In diesem Fall kann auch der zumindest eine Drahtsprung 41 im Bereich des Versatzes 42 des Drahtes 4 ausgebildet sein. In diesem Zusammenhang können auch mehrere erste Bereiche und mehrere zweite Bereiche entlang des Spulenumfanges ausgebildet sein, wobei zwischen jeweils einem ersten Bereich und einem anderen ersten Bereich ein zweiter Bereich ausgebildet ist. Es kann vorgesehen sein, dass in der Lücke 6 zumindest zwei oder mehr Stützwindungen 51 angeordnet werden. Dies kann vor allem bei Spulen 1 mit zwei oder mehr gewickelten, insbesonders parallel gewickelten, Drähten 4 vorteilhaft sein.

Diese Stützwindung 51 könnte in anderen Ausführungsformen auch in anderen Wickellagen 2 angeordnet sein. In Verallgemeinerung kann deshalb die Anordnung der Stützwindung 51 in einer ersten Wickellage 21 angeordnet sein, wobei diese erste Wickellage 21, wie beispielsweise in dieser Ausführungsform, die viertinnerste Wickellage 2 sein kann. Es können dabei auch mehrere Stützwindungen 51 in unterschiedlichen Wickellagen ausgebildet sein. Derart können auch mehrere, jeweils einer Stützwindung 51 einer Wickellage 2 zugehörige, erste Wickellagen 21 ausgebildet sein. Wenn mehrere Stützwindungen 51 in einer Wickellage 2, beispielsweise der siebentimiersten Wickellage 2, ausgebildet sind, dann ist jeder dieser mehreren Stützwindungen 51 genau eine erste Wickellage 21 zugehörig und jede dieser ersten Wickellagen 21 ist mit der siebentinnersten Wickellage identisch.

Es kann vorgesehen sein, dass vor oder nach dem Wickeln der zumindest einen Stützwindung 51 zumindest eine Windung 5 einer zweiten Wickellage 22 gewickelt wird, wobei die zweite Wickellage 22 benachbart zur ersten Wickellage 21 und auf der der Spuleninnenseite 14 abgewandten Seite der ersten Wickellage 21 angeordnet ist. Ebenso kann vorgesehen sein, dass mit der Stützwindung 51 die zweite Wickellage 22 begrenzt wird. Dabei kann die zweite Wickellage 22 je nach Ausführungsform mit der zweitinnersten, drittinnersten, viertinnersten, fünftinnersten usw. Wickellage 2 der Spule 1 identisch sein. Dabei kann mit der Stützwindung 51 die zweite Wickellage 2 begrenzt sein. Ebenfalls kann dabei die Länge der ersten Wickellage 21 größer als die Länge der zweiten Wickellage 22 sein. Derart kann ein kann ein temporäres offenes Ende 24 oder eine Stufe 23 in der Spule 1 ausgebildet sein.

Weiters kann vorgesehen sein, dass die Windungen 5 der zweiten Wickellage 22 nach der Wicklung der Stützwindung 51 gewickelt werden und dass an der Einführungsstelle des Drahtes 4 in die Lücke 6 eine Führung für die erste in der zweiten Wickellage 22 gewickelte Windung 54 ausgebildet wird. Das Wickeln der Stufe 23 oder des temporären offenen Endes 24 der zweiten Wickellage 22 ist derart besonders einfach darstellbar.

In der Fig. 7 sind weiters die beiden Stufen 23 dargestellt. Die Stufe 23 wird dabei von einer Windung 5 einer oberen Stufenwickellage und von mehreren Windungen 5 einer unteren Stufenwickellage gebildet. Jeder dieser beiden Stufen 23 kann eine außenliegende Tangente 35 zugeordnet werden. Durch die einer der Stufen 23 umfassten Windungen 5 und der dieser Stufe zugehörigen außenliegenden Tangente 35 wird eine Stufenfreifläche 34 ausgebildet. Diese Stufenfreifläche 34 ist dabei im Wesentlichen der keilförmige Bereich ab der Stufe 23 bis zum Ende der unteren Stufenwickellage, welches entweder durch eine weitere Stufe 23 oder die Deckfläche 17 gebildet werden kann.

Die Fig. 8 bis 10 zeigen eine Spule 1 mit einer Maschinenlagenwicklung, insbesondere einer Maschinenlagenpräzisionswicklung, mit wenigstens einem Draht 4, wobei die Spule 1 eine Spulenachse 11, eine Spuleninnenseite 14, eine Grundfläche 16, eine Deckfläche 17, und zumindest zwei Wickellagen 2 umfasst, wobei eine Wickellage 2 von im Wesentlichen parallel zur Spuleninnenseite 14 angeordneten Windungen 5 gebildet wird, die Spulenachse 11 parallel zur Haupt-Magnetfeldrichtung der stromdurchflossenen Spule 1 angeordnet ist und wobei die Grundfläche 16 und die Deckfläche 17 jeweils im Wesentlichen normal auf die Spulenachse 11 sind, wobei zumindest eine zweite Wickellage 22 unvollständig gewickelt ist, und dass das von der Grundfläche 16 bzw. der Deckfläche 17 beabstandete Ende der zweiten Wickellage 22 von einer Stützwindung 51 begrenzt ist, wobei die Stützwindung 51 zumindest bereichsweise in der zur zweiten Wickellage 22 in Richtung der Spuleninnenseite 14 benachbarten ersten Wickellage 21 angeordnet ist.

Die Fig. 8 zeigt eine Spule 1 in einer zweiten Ausführungsform in axonometrischer Darstellung in einer Momentaufnahme während des Wickelns. Dargestellt sind das erste Ende des Drahtes 4 der Spule, welches mit der innersten Wickellage 2 der Spule verbunden ist und der Spulenträger 7, welcher Kunststoff, Metall, Holz oder Compositwerkstoffe umfassen kann. Weiters sind eine Spulenlänge 12, eine Spulenbreite 13 und eine Spulenhöhe 18 dargestellt. Mehrere Wickellagen 2 entlang der Spulenhöhe 18 gewickelt, wobei die Anzahl der übereinander gewickelten Wickellagen 2 entlang der Spulenhöhe 18 variiert, wodurch eine Spule 1 umfassend Stufen 23 an der Spulenaußenseite 15 ausgebildet ist, also eine konische Spule 1. Die Spule 1 weist erste Bereiche, in welchen der Draht 4 ohne Vorschub geführt wird und ohne Versatz 42 gewickelt ist, und zweite Bereiche, in welchen der Draht 4 mit Vorschub geführt wird und mit Versatz 42 gewickelt ist, auf. Der erste Bereich ist entlang der Spulenlänge 12 ausgebildet. Der zweite Bereich ist entlang der Spulenbreite 13 ausgebildet.

Die in der Fig. 8 dargestellte Momentaufnahme während des Wickelns zeigt eine vollständig gewickelte Wickellage 2 und eine unvollständig gewickelte Wickellage 2. Die unvollständige Wickellage 2 wird zur leichteren Unterscheidung - und da in dieser Abbildung nicht ersichtlich ist, wie viele Wickellagen 2 unter dieser Wickellage 2 gewickelt sind - als erste Wickellage 21 bezeichnet. In der ersten Wickellage 21 ist eine Lücke 6 ausgebildet. Diese Lücke 6 wird durch den vergrößerten Versatz 42 des Drahtes 4 einer ersten Windung 54 dieser ersten Wickellage 21 ausgebildet.

Dieser dargestellten Momentaufnahme unmittelbar folgend wird der Drahtsprung 41 gewickelt, welcher in der Fig. 9 dargestellt ist. Die Fig. 9 stellt dabei eine weitere Momentaufnahme des Wickelvorganges der Spule dar, wobei gegenüber der Fig. 8 genau eine zusätzlich gewickelte Windung 5 dargestellt ist. Vom offenen Ende 24 in der ersten Wickellage 21 wird der Draht mittels eines Drahtsprunges 41 in die Lücke 6 in der ersten Wickellage 21 geführt. Nach dem Drahtsprung 41 wird direkt anschließend die Stützwindung 51 in dieser Lücke 6 gewickelt. Diese Stützwindung 51 liegt zumindest bereichsweise vollständig in der in der ersten Wickellage 21. Dabei können zumindest bereichsweise weitere Windungen 5 in der ersten Wickellage 21 an gegenüberliegende Seiten der Stützwindung 51 angrenzen.

Der weitere Wickelvorgang ist in Fig. 10 ersichtlich. Am Ende der Stützwindung 51 wird der Draht 4 aus der ersten Wickellage 21 in eine unmittelbar darüberliegende zweite Wickellage 22 geführt, wodurch eine Stufe 23 in der Spulenaußenseite 15 ausgebildet ist. Die zweite Wickellage 22 ist eine zur ersten Wickellage 21 verschiedene Wickellage 2 der Spule 1. Beispielsweise kann die erste Wickellage 21 die viertinnerste Wickellage 2 sein, sodass die zweite Wickellage 22 die fünftinnerste Wickellage 2 ausbildet. Die zweite Wickellage 22 wird ab dieser Stufe 23 in Richtung Deckfläche 17 gewickelt. Nachdem bis zur Deckfläche 17 gewickelt wurde, wird der Draht 4 durch den Spulenträger 7 hindurchgeführt und die Spule 1 ist vollständig gewickelt.

Die Spule 1 kann somit bereichsweise eben ausgebildet sein, wobei die Stufen 23 und offenen Enden 24 der Spule 1 eine konische Spulenaußenfläche 15 ermöglichen. Weiters kann die Spule 1 mit einer konvexen oder einer konkaven Spulenaußenfläche 15 ausgebildet sein, sodass die Kontur der Spule 1 der des elektrischen Bauteils noch besser angepasst und die Leistungsdichte des elektrischen Bauteiles noch weiter erhöht werden kann.

Da der Draht entlang der Spulenlänge 12 und insbesonders im ersten Bereich entlang des Spulenumfangs in allen Wickellagen 2 im Wesentlichen parallel zueinander geführt werden kann, wird und ein den Füllgrad verminderndes Kreuzen des Drahtes unterschiedlicher Wickellagen 1 in diesen Bereichen vermieden, wobei die Wicklung orthozyklisch gewickelt werden kann. Dabei kann die Stützwindung 51 im Wesentlichen im gesamten ersten Bereich vollständig in der ersten Wickellage 21 angeordnet sein. Dabei kann die Abstützung der Stützwindung 51 in beide Richtungen parallel zur ersten Wickellage 21 erfolgen. Mittels der derartig ausgebildeten Stützwindung 51 wird ermöglicht, dass an beiden Enden der Stützwindung 51 ein Drahtsprung 41 ausgebildet ist, womit unmittelbar vor und unmittelbar nach der Stützwindung 51 jeweils ein Drahtsprung 41 gewickelt werden kann. Selbst komplexe Konturen können somit maschinell sicher, reproduzierbar und bei geringen Maßtoleranzen ausgebildet werden.

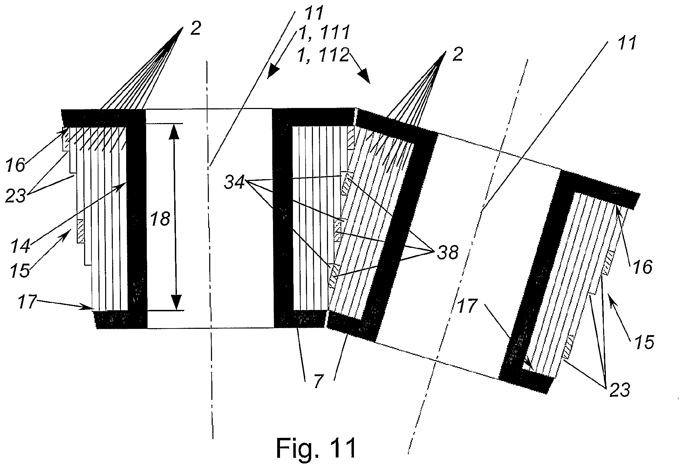

Die Fig. 11 zeigt zwei benachbarte unterschiedliche Spulen 1 einer dritten und vierten Ausführungsform einer Spulenanordnung im Schnitt, wobei die insbesonders ringförmige Spulenanordnung eines nicht dargestellten elektrischen Bauteils eine Vielzahl von Spulen 1 umfasst. Dargestellt sind zwei unterschiedliche Ausführungsformen der Spule 1, welche alternierend benachbart angeordnet sind. Die in der Ansicht dargestellt linke der beiden Spulen 1 wird - zur besseren Unterscheidung und ohne Reihung oder Wertung - als erste Spule 111 und die rechte der beiden Spulen 1 wird als zweite Spule 112 bezeichnet. Für diese, kreisförmige, ovale, rechteckige oder insbesondere ringförmige Spulenanordnung umfassend einer Mehrzahl von Spulen 1 zumindest zweier unterschiedlicher Ausführungsformen von Spulen 1 kann deshalb auch von der gleichzeitigen Verwendung eines Spulentyps "A", beispielsweise die erste Spule 111, und eines Spulentyps "B", beispielsweise die zweite Spule 112, gesprochen werden. Um komplexere und/oder von der Kreisform abweichende Geometrien darzustellen, können auch drei oder mehr Ausführungsformen der Spulen 1, 111, 112 zusammenwirkend verwendet werden. Diese Spulenanordnung kann in einem elektrischen Bauteil, insbesondere Elektromotor, mit einer Spulenanordnung, insbesondere einer ringförmigen Spulenanordnung, wobei das elektrische Bauteil zumindest eine erfindungsgemäße Spule 1 umfasst. Die beiden voneinander verschiedenen Spulen 1, 111, 112 sind benachbart nebeneinanderliegend angeordnet, wobei die beiden Spulenachsen 11 der beiden verschiedenen Spulen 1, 111, 112 nicht zusammenfallen.

Die einzelnen Windungen 5 der Spulen 1, 111, 112 sind in dieser schematischen Darstellung nicht dargestellt, wohl aber sind die einzelnen Wickellagen 2 dargestellt. Weiters ist der Spulenträger 7, die Spuleninnenseite 14, die Spulenaußenseite 15, die Grundfläche 16, die Deckfläche 17 und die Spulenhöhe 18 dargestellt. Die erste Spule 111 weist maximal neun Wickellagen 2 auf. Die zweite Spule 111 weist maximal acht Wickellagen 2 auf. Die Maximalzahl der Wickellagen 2 ist in beiden Spulen 1, 111, 112 im Bereich der Grundfläche 16 angeordnet. Derart kann ein elektrisches Bauteil ausgebildet sein, wobei die Spulenaußenseite 15 zumindest einer der Spulen 1 wenigstens eine Stufe 23 aufweist, wobei die wenigstens eine Stufe 23 von außenliegenden Windungen 5 einer unteren Stufenwickellage und einer außenliegenden Windung 5 einer oberen Stufenwickellage gebildet ist. Bei mehreren Stufen 1 entlang der Spulenhöhe 18 können mehrere obere Stufenwickellagen und mehrere untere Stufenwickellagen ausgebildet sein.

Die in die Stufenfreiflächen 34 eingreifenden Bereiche außenliegender Windungen 5 einer benachbarten Spule 1 sind in einigen Wickelschichten 2 ausgebildet und sind in der Fig. 11 schraffiert dargestellt. Diese schraffierten Bereiche werden im weiteren als Überschneidungsbereiche 38 bezeichnet. Diese Überschneidungsbereiche 38 sind also jene Windungen 5 einer Spule 1, 111, 112, welche in die Stufenfreiflächen 34 der zur dieser einen Spule 1, 111, 112 benachbarten Spule 1, 111, 112 eingreifen können.

Die unterschiedliche Ausbildung der Spulenaußenseiten 15 zwischen erster Spule 111 und zweiter Spule 112 ist besonders in der Mitte in der Figur erkennbar, in welchem die beiden abgebildeten Spulen 1, 111, 112 benachbart aneinander grenzen. Beginnend an der Grundfläche 16 der ersten Spule 111 sind einige Windungen 5 der neunten Wickellage 2, welche die äußerste Wickellage 2 in diesem Bereich der ersten Spule 111 darstellt, ausgebildet. Eine Stufe 23, die zur Grundfläche 16 nächstliegende Stufe 23, welche im weiteren als erste Stufe 23 der ersten Spule 111 bezeichnet wird, begrenzt die zur Deckfläche 17 hin offene neunte Wickellage 2 der ersten Spule 111. Weiter entlang der Spulenaußenseite 15 in Richtung zur Deckfläche 17 sind ist eine zweite Stufe 23 der ersten Spule 111 ausgebildet. Zwischen erster und zweiter Stufe 23 sind in der ersten Spule 111 acht Wickellagen 2 übereinander ausgebildet und die achte Wickellage 2 bildet in diesem Bereich der Spulenhöhe 18 die äußerste Wickellage 2 der ersten Spule 111. Am zur Deckfläche 17 hin offenen Ende der achten Wickellage 2 der ersten Spule 111 ist die dritte Stufe 23 ausgebildet. Zwischen dritter Stufe 23 und zweiter Stufe 23 sind in der ersten Spule 111 sieben Wickellagen 2 übereinander ausgebildet und die siebente Wickellage 2 bildet in diesem Bereich der Spulenhöhe 18 die äußerste Wickellage 2. Am zur Deckfläche 17 hin offenen Ende der siebten Wickellage 2 der ersten Spule 111 ist die vierte Stufe 23 der ersten Spule 111 ausgebildet. Zwischen dritter und vierter Stufe 23 sind in der ersten Spule 111 sechs Wickellagen 2 übereinander ausgebildet und die sechste Wickellage 2 bildet in diesem Bereich der Spulenhöhe 18 die äußerste Wickellage 2. Ab der vierten Stufe 23 der ersten Spule 1 sind fünf Wickellagen 2 übereinander ausgebildet und die fünfte Wickellage 2 bildet zwischen vierter Stufe 23 und der Deckfläche 17 die Spulenaußenseite 15 der ersten Spule 111 aus.

Ähnlich die Anordnung bei der zweiten Spule 112, welche gemäß der Fig. 11 eine zur ersten Spule 111 unterschiedlich ausgestaltete Spule 1 darstellt: Im Bereich der Deckfläche 16 sind acht Wickellagen 2 übereinander ausgebildet und die achte Wickellage 2 bildet in diesem Bereich die Spulenaußenseite 15 der zweiten Spule 112 aus. Ab der zur Grundfläche 16 nächstliegenden Stufe 23 der zweiten Spule 112, also der ersten Stufe 23 der zweiten Spule 112, sind sieben Wickellagen 2 übereinander ausgebildet und die Spulenaußenseite 15 wird in diesem Bereich der zweiten Spule 112 durch die siebente Wickellage 2 ausgebildet. Am zur Deckfläche 17 der zweiten Spule 112 hin offenen Ende der siebenten Wickellage 2 der zweiten Spule 112 ist die zweite Stufe 23 der zweiten Spule 112 ausgebildet. Am zur Deckfläche 17 der zweiten Spule 112 hin offenen Ende der sechsten Wickellage 2 der zweiten Spule 112 ist die dritte Stufe 23 der zweiten Spule 112 ausgebildet. Zwischen zweiter und dritter Stufe 23 der zweiten Spule 112 sind sechs Wickellagen 2 übereinander ausgebildet und die Spulenaußenseite 15 ist in diesem Bereich durch die sechste Wickellage 2 ausgebildet. Ab der dritten Stufe 23 der zweiten Spule 112 sind fünf Wickellagen 2 übereinander gewickelt und die Spulenaußenseite 15 ist zwischen der dritten Stufe 23 und der Deckfläche 17 durch die fünfte Wickellage 2 ausgebildet.

Die erste Spule 111 und die zweite Spule 112 unterscheiden sich somit in der Anzahl der maximalen Wickellagen 2 und in der Anzahl der entlang der Spulenhöhe ausgebildeten Stufen 23. Die Positionen entlang der Spulenhöhe der Stufen 23 der beiden Spulen 1, 111, 112 sind ebenfalls unterschiedlich ausgebildet. Den geringsten Abstand zur Grundfläche 16 weist die erste Stufe 23 der ersten Spule 111 auf. Den zweitgeringsten Abstand zur Grundfläche 16 weist die zweite Stufe 23 der ersten Spule 111 auf. Den drittgeringsten Abstand zur Grundfläche 16 weist die erste Stufe 23 der zweiten Spule 112 auf. Den viertgeringsten Abstand zur Grundfläche 16 weist die zweite Stufe 23 der zweiten Spule 112 auf. Den fünftgeringsten Abstand zur Grundfläche 16 weist die dritte Stufe 23 der ersten Spule 111 auf. Den sechstgeringsten Abstand zur Grundfläche 16 weist die vierte Stufe 23 der ersten Spule 111 auf. Den siebentgeringsten und sogleich größten Abstand zur Grundfläche 16 weist die dritte Stufe 23 der zweiten Spule 112 auf.

Die erste Stufe 23 der zweiten Spule 112 greift bei dieser vorteilhaften Anordnung der benachbarten Spulen 1, 111, 112 in die Stufenfreifläche 34 der zweiten Stufe 23 der ersten Spule 111 ein. Die dritte Stufe 23 der ersten Spule 111 greift in die Stufenfreifläche 34 der zweiten Stufe 23 der zweiten Spule 112 ein. Und die dritte Stufe 23 der zweiten Spule 112 greift in die Stufenfreifläche 34 der vierten Stufe 23 der ersten Spule 111 ein. Die Stufenfreiflächen 34 können derart besser genutzt werden und teilweise mit Draht 4 befüllt werden, womit ein höherer Füllgrad der Spulenanordnung ermöglicht wird und die Leistungsdichte der Spulenanordnung und des die Spulenanordnung umfassenden - nicht dargestellten - elektrischen Bauteiles erhöht werden kann. Dabei können die erste Spule 111 und die zweite Spule 112 insbesondere auch orthozyklisch gewickelt werden.

Derart kann einem elektrischen Bauteil vorgesehen sein, dass eine Spulenaußenfläche 15 zumindest einer der Spulen 1 wenigstens eine Stufe 23 aufweist, wobei die wenigstens eine Stufe 23 von außenliegenden Windungen 5 einer unteren Wickellage und einer außenliegenden Windung 5 einer oberen Wickellage gebildet ist, dass - in einer die Spulenachse 11 enthaltenden Schnittebene gesehen - eine Stufenfreifläche 34 durch die Windungen 5 der Stufe 23 und die äußere Tangente 35 an die Windungen 5 der Stufe 23 gebildet ist, und dass in eine der wenigstens einen Stufenfreifläche 34 eine weitere der Spulen 1 eingreift.

Im Unterschied dazu sind - in einer nicht dargestellten Ausführungsform - in den einander zugewandten Spulenaußenseiten 15 zweier benachbarten Spulen 1 gleicher Ausführungsform die Stufen 34 spiegelgleich ausgebildet. Somit können sich bei benachbarter Anordnung dieser beiden Spulen 1 jeweils eine Stufe 34 der einen Spule 1 und eine Stufe 34 der anderen Spule 1 berühren. Dabei kann jedoch der Stufenfreiraum 34 nicht mit Draht befüllt werden, sodass der maximale Abstand der Spulen 1 bei Berührung der beiden Spulen 1 im Bereich der Stufen 34 in etwa dem zweifachen Drahtdurchmesser entspricht.

Dieser maximale Abstand der Spulen 1 kann bei der Anordnung zweier einander berührender benachbarter Spulen 1 unterschiedlicher stufenförmiger Ausführungsform im Wesentlichen halbiert werden. Derart kann in einem elektrischen Bauteil ermöglicht werden, dass eine Spulenaußenfläche 15 zumindest einer der Spulen 1 wenigstens eine Stufe 23 aufweist, wobei die wenigstens eine Stufe 23 von außenliegenden Windungen 5 einer unteren Wickellage und einer außenliegenden Windung 5 einer oberen Wickellage gebildet ist, dass - in einer die Spulenachse 11 enthaltenden Schnittebene gesehen - eine Stufenfreifläche 34 durch die Windungen 5 der Stufe 23 und die äußere Tangente 35 an die Windungen 5 der Stufe 23 gebildet ist, und dass in eine der wenigstens einen Stufenfreifläche 34 eine weitere der Spulen 1 eingreift.

Durch die kleinen Toleranzen können benachbarte Spulen 1, 111, 112 im elektrischen Bauteil mit geringerem Abstand zueinander angeordnet werden und die Leistungsdichte des elektrischen Bauteiles, insbesondere des Elektromotors, wird erhöht. Insbesondere können Stell- und Elektromotoren mit gleichbleibender Leistung und/oder kleineren Abmessungen und niedrigerem Gewicht ausgebildet werden.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zum maschinellen Wickeln einer konischen Spule (1) mit wenigstens einem Draht (4), welcher einen Leiter und eine Isolationsschicht aufweist, wobei die konische Spule (1) eine Spuleninnenseite (14) und zumindest zwei Wickellagen (2) umfasst, wobei eine Wickellage (2) von im Wesentlichen parallel zur Spuleninnenseite (14) angeordneten Windungen (5) gebildet wird, wobei zumindest beim Wickeln einer ersten Wickellage (21) an einer vorgebbaren Stelle zwischen einer ersten Windung (54) und einer zur ersten Windung (54) benachbarten zweiten Windung (55), wobei die zweite Windung (55) unmittelbar nachfolgend nach der ersten Windung (54) gewickelt wird, eine Lücke (6) ausgebildet wird, wobei die Breite der Lücke (6) zumindest bereichsweise wenigstens einen Drahtdurchmesser beträgt, und dass der Draht (4) nach dem Wickeln der zweiten Windung (55), und gegebenenfalls nach dem Wickeln weiterer Windungen (5), in die Lücke (6) geführt wird, wodurch zumindest eine Stützwindung (51) ausgebildet wird, wobei vor oder nach der Wicklung der zumindest einen Stützwindung (51) zumindest eine Windung (5) einer zweiten Wickellage (22) gewickelt wird, wobei die zweite Wickellage (22) benachbart zur ersten Wickellage (21) und auf der der Spuleninnenseite (14) abgewandten Seite der ersten Wickellage (21) angeordnet ist, **dadurch gekennzeichnet, dass** zumindest die zweite Wickellage (22) unvollständig gewickelt wird, dass mit der Stützwindung (51) die zweite Wickellage (22) begrenzt wird.

2. Verfahren nach Anspruch 1, **dadurch gekennzeichnet, dass** die Länge der ersten Wickellage (21) größer als die Länge der zweiten Wickellage (22) ist.

3. Verfahren nach Anspruch 1 oder 2, **dadurch gekennzeichnet, dass** die Windungen (5) der zweiten Wickellage (22) nach der Wicklung der Stützwindung (51) gewickelt werden und dass an der Einführungsstelle des Drahtes in die Lücke (6) eine Führung für die erste in der zweiten Wickellage (22) gewickelte Windung (54) ausgebildet wird.

4. Verfahren nach einem der vorhergehenden Ansprüche, **dadurch gekennzeichnet, dass** die Stützwindung (51) zur nachfolgend gewickelten Windung (5) zumindest um zwei, vorzugsweise um zumindest drei, insbesondere um zumindest vier, Drahtdurchmesser beabstandet wird.

5. Verfahren nach einem der vorhergehenden Ansprüche, **dadurch gekennzeichnet, dass** die Stützwindung (51) zur vorhergehend gewickelten Windung (5) zumindest um zwei, vorzugsweise um zumindest drei, insbesondere um zumindest vier, Drahtdurchmesser beabstandet wird.

6. Verfahren nach einem der vorhergehenden Ansprüche, **dadurch gekennzeichnet, dass** die konische Spule (1) mit einer orthozyklischen Wicklung ausgebildet wird.

7. Verfahren nach einem der vorhergehenden Ansprüche, **dadurch gekennzeichnet, dass** die Stützwindung (51) zumindest bereichsweise vollständig in der ersten Wickellage (21) angeordnet wird.

8. Verfahren nach einem der vorhergehenden Ansprüche, **dadurch gekennzeichnet, dass** in der Lücke (6) zumindest zwei Stützwindungen (51) angeordnet werden.

9. Konische Spule mit einer Maschinenlagenwicklung, insbesondere einer Maschinenlagenpräzisionswicklung, mit wenigstens einem Draht (4), welcher einen Leiter und eine Isolationsschicht aufweist, wobei die konische Spule (1) eine Spulenachse (11), eine Spuleninnenseite (14), eine Grundfläche (16), eine Deckfläche (17), und zumindest zwei Wickellagen (2) umfasst, wobei eine Wickellage (2) von im Wesentlichen parallel zur Spuleninnenseite (14) angeordneten Windungen (5) gebildet wird, die Spulenachse (11) parallel zur Haupt-Magnetfeldrichtung der stromdurchflossenen konischen Spule (1) angeordnet ist und wobei die Grundfläche (16) und die Deckfläche (17) jeweils im Wesentlichen normal auf die Spulenachse (11) sind, wobei zumindest eine erste Wickellage (21) an einer vorgebbaren Stelle zwischen einer ersten Windung (54) und einer zur ersten Windung (54) benachbarten zweiten Windung (55), wobei die zweite Windung (55) unmittelbar nachfolgend nach der ersten Windung (54) gewickelt ist, eine Lücke (6) aufweist, wobei die Breite der Lücke (6) zumindest bereichsweise wenigstens einen Drahtdurchmesser beträgt, und wobei der Draht (4) nach der zweiten Windung (55), und gegebenenfalls nach weiterer Windungen (5), zum Ausbilden zumindest einer Stützwindung (51) in der Lücke (6) angeordnet ist, wobei eine zweite Wickellage (22) benachbart zur ersten Wickellage (21) und auf der der Spuleninnenseite (14) abgewandten Seite der ersten Wickellage (21) angeordnet ist, wobei die Stützwindung (51) zumindest bereichsweise in der zur zweiten Wickellage (22) in Richtung der Spuleninnenseite (14) benachbarten ersten Wickellage (21) angeordnet ist, **dadurch gekennzeichnet, dass** zumindest die zweite Wickellage (22) unvollständig gewickelt ist, und dass das von der Grundfläche (16) bzw. der Deckfläche (17) beabstandete Ende der zweiten Wickellage (22) von der Stützwindung (51) begrenzt ist.

10. Konische Spule nach Anspruch 9, **dadurch gekennzeichnet, dass** weitere Windungen (5) zumindest bereichsweise in der ersten Wickellage (21) an gegenüberliegende Seiten der Stützwindung (51) angrenzen.

11. Elektrisches Bauteil, insbesondere Elektromotor, mit einer Spulenanordnung, insbesondere einer ringförmigen Spulenanordnung, **dadurch gekennzeichnet, dass** das elektrische Bauteil zumindest eine konische Spule (1) nach einem der Ansprüche 9 bis 10 umfasst.

12. Elektrisches Bauteil nach Anspruch 11, **dadurch gekennzeichnet, dass** eine Spulenaußenfläche (15) zumindest einer der konischen Spulen (1) wenigstens eine Stufe (23) aufweist, wobei die wenigstens eine Stufe (23) von außenliegenden Windungen (5) einer unteren Wickellage und einer außenliegenden Windung (5) einer oberen Wickellage gebildet ist, dass - in einer die Spulenachse (11) enthaltenden Schnittebene gesehen - eine Stufenfreifläche (34) durch die Windungen (5) der Stufe (23) und die äußere Tangente (35) an die Windungen (5) der Stufe (23) gebildet ist, und dass in eine der wenigstens einen Stufenfreifläche (34) eine weitere der konischen Spulen (1) eingreift.

13. Elektrisches Bauteil nach Anspruch 11 oder 12, **dadurch gekennzeichnet, dass** zumindest zwei benachbarte der konischen Spulen (1) jeweils eine stufenförmige Spulenaußenfläche (15) aufweisen, wobei die Stufen (23) der einander zugewandten Spulenaußenflächen (15) dieser konischen Spulen (1) so angeordnet sind, dass der Abstand der Spulenaußenflächen (15) im Wesentlichen kleiner oder gleich dem 1,3fachen, vorzugsweise dem 1,2fachen, insbesondere dem 1,1fachen, des Drahtdurchmessers ist.

## Claims

1. A method for the mechanical winding a conical coil (1) having at least one wire (4) which comprises a conductor and an insulating layer, wherein the conical coil (1) comprises a coil inner side (14) and at least two winding layers (2), wherein a winding layer (2) is formed by wire turns (5) arranged substantially parallel to the coil inner side (14), wherein at least when winding a first winding layer (21) at a predeterminable point between a first turn (54) and a second turn (55) adjacent to a first turn (54), wherein the second turn (55) is wound immediately after the first turn (54), a gap (6) is formed, wherein the width of the gap (6) is at least one wire diameter at least in some sections, and the wire (4) after the winding of the second turn (55), and optionally after the winding of further turns (5), is guided into the gap (6), whereby at least one support turn (51) is formed, wherein at least one turn (5) of a second winding layer (22) is wound before or after the winding of the at least one support turn (51), wherein the second winding layer (22) is arranged adjacent to the first winding layer (21) and on the side of the first winding layer (22) facing away from the coil inner side (14), **characterized in that** at least the second winding layer (22) is incompletely wound, and that the second winding layer (22) is delimited by the support turn (51).

2. A method according to claim 1, **characterized in that** the length of the first winding layer (21) is greater than the length of the second winding layer (22).

3. A method according to claim 1 or 2, **characterized in that** the turns (5) of the second winding layer (22) are wound after the winding of the support turn (51) and that at the insertion point of the wire into the gap (6) a guide for the first turn (54) wound in the second winding layer (22) is formed.

4. A method according to one of the preceding claims, **characterized in that** the support turn (51) is spaced from the subsequently wound turn (5) by at least two, preferably at least three, in particular at least four, wire diameters.

5. A method according to one of the preceding claims, **characterized in that** the support turn (51) is spaced from the previously wound winding (5) by at least two, preferably at least three, in particular at least four, wire diameters.

6. A method according to one of the preceding claims, **characterized in that** the conical coil (1) is formed with an orthocyclic winding.

7. A method according to one of the preceding claims, **characterized in that** the support turn (51) is arranged, at least in some regions, completely in the first winding layer (21).

8. A method according to one of the preceding claims, **characterized in that** at least two support windings (51) are arranged in the gap (6).

9. A conical coil having a machine layer winding, in particular a machine layer precision winding, with at least one wire (4) having a conductor and an insulating layer, wherein the conical coil (1) has a coil axis (11), a coil inner side (14), a base surface (16), a cover surface (17), and at least two winding layers (2), wherein a winding layer (2) is formed by turns (5) arranged substantially parallel to the coil inner side (14), the coil axis (11) is arranged parallel to the main magnetic field direction of the current-carrying conical coil (1), and wherein the base surface (16) and the cover surface (17) are each substantially normal to the coil axis (11), wherein at least one first winding layer (21) has a gap (6) at a predetermined location between a first turn (54) and a second turn (55) adjacent to the first turn (54), wherein the second turn (55) is wound immediately after the first turn (54), wherein the width of the gap (6) is at least one wire diameter at least in some sections, and wherein the wire (4) is arranged in the gap (6) after the second turn (55), and optionally after further windings (5), for forming at least one support turn (51), wherein a second winding layer (22) is arranged adjacent to the first winding layer (21) and on the coil inner side (14) facing away from the first winding layer (21), wherein the support winding (51) is arranged, at least in regions, in the first winding layer (21) adjacent to the second winding layer (22) in the direction of the coil inner side (14), **characterized in that** at least the second winding layer (22) is incompletely wound, and that the end of the second winding layer (22) spaced from the base surface (16) or the cover surface (17) is delimited by the support winding (51).

10. A conical coil according to claim 9, **characterized in that** further turns (5) adjoin opposite sides of the support turn (51) at least in some regions in the first winding layer (21).

11. An electrical component, in particular electric motor, with a coil arrangement, in particular an annular coil arrangement, **characterized in that** the electrical component comprises at least one conical coil (1) according to one of claims 9 to 10.

12. An electrical component according to claim 11, **characterized in that** a coil outer surface (15) of at least one of the conical coils (1) has at least one step (23), wherein the at least one step (23) is formed by external turns (5) of a lower winding layer and an outer turn (5) of an upper winding layer, that - as seen in a plane of intersection containing the coil axis (11) - a stepped free surface (34) is formed by the turns (5) of the step (23) and the outer tangent (35) on the windings (5) of the step (23), and that another of the conical coils (1) engages in one of the at least one stepped free surface (34).

13. An electrical component according to claim 11 or 12, **characterized in that** at least two adjacent ones of the conical coils (1) each have a stepped coil outer surface (15), wherein the steps (23) of the mutually facing coil outer surfaces (15) of these conical coils (1) are arranged so that the distance of the coil outer surfaces (15) is substantially less than or equal to 1.3 times, preferably 1.2 times, in particular 1.1 times, the wire diameter.

## Revendications

1. Procédé pour l'enroulement à la machine d'une bobine conique (1) avec au moins un fil métallique (4) qui comporte un conducteur et une couche d'isolation, dans lequel la bobine conique (1) comprend une face inférieure de bobine (14) et au moins deux couches d'enroulement (2), une couche d'enroulement (2) étant formée par des spires (5) disposées de façon sensiblement parallèle à la face inférieure de bobine (14), dans lequel une lacune (6) est formée au moins lors de l'enroulement d'une première couche d'enroulement (21) à un endroit pouvant être prédéterminé entre une première spire (54) et une deuxième spire (55) voisine de la première spire (54), la deuxième spire (55) étant enroulée immédiatement après la première spire (54), la largeur de la lacune (6) correspondant au moins par endroits à au moins un diamètre du fil, et dans lequel le fil (4) est guidé dans la lacune (6) après l'enroulement de la deuxième spire (55) et éventuellement après l'enroulement d'autres spires (5), ce qui forme au moins une spire d'appui (51), au moins une spire (5) d'une deuxième couche d'enroulement (22) étant enroulée avant ou après l'enroulement de l'au moins une spire d'appui (51), la deuxième couche d'enroulement (22) étant disposée au voisinage de la première couche d'enroulement (21) et sur le côté de la première couche d'enroulement (21) tourné à l'opposé de la face inférieure de bobine (14), **caractérisé en ce que** la deuxième couche d'enroulement (22), au moins, est enroulée incomplètement et **en ce que** la spire d'appui (51) délimite la deuxième couche d'enroulement (22).

2. Procédé selon la revendication 1, **caractérisé en ce que** la longueur de la première couche d'enroulement (21) est plus grande que celle de la deuxième couche d'enroulement (22).

3. Procédé selon la revendication 1 ou 2, **caractérisé en ce que** les spires (5) de la deuxième couche d'enroulement (22) sont enroulées après l'enroulement de la spire d'appui (51) et **en ce qu'**un guide pour la première spire (54) enroulée dans la deuxième couche d'enroulement (22) est formé au point d'introduction du fil dans la lacune (6).

4. Procédé selon l'une des revendications précédentes, **caractérisé en ce que** la spire d'appui (51) est distante de la spire (5) suivante à être enroulée d'au moins deux, de préférence d'au moins trois, en particulier d'au moins quatre diamètres de fil.

5. Procédé selon l'une des revendications précédentes, **caractérisé en ce que** la spire d'appui (51) est distante de la spire (5) enroulée précédemment d'au moins deux, de préférence d'au moins trois, en particulier d'au moins quatre diamètres de fil.

6. Procédé selon l'une des revendications précédentes, **caractérisé en ce que** la bobine conique (1) est formée avec un enroulement orthocyclique.

7. Procédé selon l'une des revendications précédentes, **caractérisé en ce que** la spire d'appui (51) est disposée au moins par endroits complètement dans la première couche d'enroulement (21).

8. Procédé selon l'une des revendications précédentes, **caractérisé en ce qu'**au moins deux spires d'appui (51) sont disposées dans la lacune (6).

9. Bobine conique avec un enroulement de couches à la machine, en particulier un enroulement de couches de précision à la machine, avec au moins un fil métallique (4) qui présente un conducteur et une couche d'isolation, laquelle bobine conique (1) comprend un axe de bobine (11), une face inférieure de bobine (14), une surface de base (16), une surface de couverture (17) et au moins deux couches d'enroulement (2), une couche d'enroulement (2) étant formée par des spires (5) disposées de façon sensiblement parallèle à la face inférieure de bobine (14), dans laquelle l'axe de bobine (11) est disposé parallèlement au sens de champ magnétique principal de la bobine conique (1) parcourue par le courant et dans laquelle la surface de base (16) et la surface de couverture (17) sont sensiblement perpendiculaires à l'axe de bobine (11), dans laquelle une première couche d'enroulement (21) au moins présente une lacune (6) à un endroit pouvant être prédéterminé entre une première spire (54) et une deuxième spire (55) voisine de la première spire (54), la deuxième spire (55) étant enroulée immédiatement après la première spire (54), la largeur de la lacune (6) correspondant au moins par endroits à au moins un diamètre du fil, et le fil (4) étant disposé dans la lacune (6) après la deuxième spire (55) et éventuellement après d'autres spires (5) pour former au moins une spire d'appui (51), dans laquelle une deuxième couche d'enroulement (22) est disposée au voisinage de la première couche d'enroulement (21) et sur le côté de la première couche d'enroulement (21) tourné à l'opposé de la face inférieure de bobine (14), dans laquelle la spire d'appui (51) est disposée au moins par endroits dans la première couche d'enroulement (21) voisine de la deuxième couche d'enroulement (22) dans la direction de la face inférieure de bobine (14), **caractérisée en ce que** la deuxième couche d'enroulement (22), au moins, est enroulée incomplètement et **en ce que** l'extrémité de la deuxième couche d'enroulement (22) distante de la surface de base (16) ou de la surface de couverture (17) est délimitée par la spire d'appui (51).

10. Bobine conique selon la revendication 9, **caractérisée en ce que** d'autres enroulements (5) sont contigus au moins par endroits de faces opposées de la spire d'appui (51) dans la première couche d'enroulement (21).

11. Composant électrique, en particulier moteur électrique, avec une disposition de bobine, en particulier une disposition de bobine conique, **caractérisé en ce que** le composant électrique comprend au moins une bobine conique (1) selon l'une des revendications 9 à 10.

12. Composant électrique selon la revendication 11, **caractérisé en ce qu'**une surface extérieure de bobine (15) d'au moins une des bobines coniques (1) présente au moins un gradin (23), l'au moins un gradin (23) étant formé par des spires extérieures (5) d'une couche d'enroulement inférieure et une spire extérieure (5) d'une couche d'enroulement supérieure, **en ce que**, vu dans un plan de coupe incluant l'axe de bobine (11), une surface sans gradin (34) est formée par les spires (5) du gradin (23) et la tangente extérieure (35) aux spires (5) du gradin (23) et **en ce qu'**une autre des bobines coniques (1) se met en prise dans l'au moins une surface sans gradin (34).

13. Composant électrique selon la revendication 11 ou 12, **caractérisé en ce qu'**au moins deux des bobines coniques (1) voisines présentent chacune une surface extérieure de bobine (15) en forme de gradin, les gradins (23) des surfaces extérieures de bobine (15) de ces bobines coniques (1) tournées l'une vers l'autre étant disposés de telle sorte que la distance entre les surfaces extérieures de bobine (15) soit sensiblement inférieure ou égale à 1,3 fois, de préférence 1,2 fois, en particulier 1,1 fois le diamètre du fil.
